# EUROPEAN PATENT SPECIFICATION

(11) **EP 3 737 116 B1**
(45) Date of publication and mention of the grant of the patent: **19.03.2025**
(21) Application number: 19173728.7
(22) Date of filing: 10.05.2019
(51) Int. Cl.: H04R 25/00, H04B 17/21, H04R 5/04, H04S 7/00

(54) **BINAURAL HEARING SYSTEM WITH IN-SITU CALIBRATION OF RF RECEIVER**
BINAURALES HÖRSYSTEM MIT IN-SITU-KALIBRIERUNG DES RF-EMPFÄNGERS
SYSTÈME AUDITIF BINAURICULAIRE AVEC ÉTALONNAGE IN SITU DU RÉCEPTEUR RF

(43) Date of publication of application: 11.11.2020
(73) Proprietor: Sonova AG, 8712 Stäfa (CH)
(72) Inventor: Högberg, Jonas, 8712 Stäfa (CH)
(74) Representative: Schwan Schorer & Partner mbB

(56) References cited:
- US-A1- 2012 328 111
- US-A1- 2017 034 635
- US-A1- 2018 020 298

## Description

The disclosure relates to a binaural hearing system comprising a first hearing device to be worn at or at least partly in a first ear of a user and a second hearing device to be worn at or at least partly in a second ear of the user, wherein each hearing device comprises a receiver unit for wirelessly receiving RF (radio frequency) signals and a signal processing unit for processing input audio signals so as to generate processed audio signals to be used for hearing stimulation.

Wireless binaural hearing systems may be used, for example, with a wireless audio source, such as a wireless microphone used by a person speaking to the user of the hearing devices. An example of such system is described in WO 2011/015675 A2, wherein the RF signal strength received by the right ear hearing device is compared to the RF signal strength as received by the left ear hearing device so as to estimate from the respective difference of the RSSI ("received signal strength indicator") values the angular location, i.e., the angle of arrival, of the RF signal source. The estimated angular localization of the audio source is used in the processing of the audio signals received wirelessly from the audio source in a manner so that the angular localization impression of the audio signals received from the audio source as perceived by the user corresponds to the estimated angular localization of the audio source. It is mentioned in WO 2011/015675 A2 that the accuracy of the angular localization estimation depends on a proper calibration of the RSSI readout during manufacturing of the hearing devices.

Another example of a wireless binaural hearing system using a wireless microphone is described in WO 2016/116160 A1, wherein in the angular localization estimation not only the received signal strength of the RF signals is used, but in addition the phase difference between the audio signal received via the RF link from the audio source and the acoustic audio signal received from the audio source and also the difference of the level of the acoustic audio signal received by the hearing devices are used.

US 2017/0359660 A1 relates to a binaural hearing system, wherein channel selection of the binaural communication occurs based on the RSSI of the signal received from the other hearing device.

EP 2 399 403 B1 relates to testing of a wireless hearing system, wherein a transmitter may be checked by measuring RSSI, FER (frame error rate) or BER (bit error rate).

EP 2 750 408 A1 relates to a binaural hearing system, wherein the antenna matching circuit of a hearing device is adjusted according to the RSSI of a signal wirelessly received from the other hearing device.

In practice, the wireless receiver chip in wireless hearing devices will have a certain spread allowed by the specification, for example ± 4 dBm; further, also the antenna and the soldering of the antenna may add to the sensitivity spread. On top of such spread resulting from production of the hearing device also the head anatomy of the user may contribute to a difference in the received signal strength.

It is an object of the disclosure to provide for a wireless binaural hearing system which is capable of using binaural asymmetries in the received RF signals in a relatively reliable manner. It is a further object to provide for a corresponding method of operating a wireless binaural hearing system.

According to the disclosure, these objects are achieved by a hearing system as defined in claim 1 and a method as defined in claim 14, respectively.

Each of the hearing devices of the binaural hearing system comprises a receiver unit for wirelessly receiving RF signals, a control unit and a signal processing unit for processing input audio signals so as to generate processed audio signals to provide hearing assistance to the user. The receiver unit comprises a measurement unit for measuring quality of the received RF signal so as to provide for an ipsilateral RF signal quality parameter. The control unit comprises an offset adapter unit for adjusting the ipsilateral RF signal quality parameter to produce an adjusted ipsilateral RF signal quality parameter, which is supplied to the ipsilateral signal processing unit, and a filter unit for determining a filtered ipsilateral RF signal quality parameter by filtering the ipsilateral RF signal quality parameter. The control unit is configured to receive a filtered contralateral RF signal quality parameter from the other hearing device and to adjust the offset adapter unit according to a difference between the filtered ipsilateral RF signal quality parameter and the filtered contralateral RF signal quality parameter.

By providing the binaural hearing system with such in-situ calibration of the receiver unit, sensitivity asymmetries may be compensated without the need for calibration or measurement of sensitivity during production.

In some implementations, the ipsilateral RF signal quality parameter is indicative of an RF signal level, such as an RSSI value, a BER value, a FER value or a retransmission rate value.

In some implementations, the control unit is configured to control the offset adapter unit in a manner so as to equalize the adjusted ipsilateral RF signal quality parameter and the adjusted contralateral RF signal quality parameter in the event that the two hearing devices receive an RF signal with the same quality.

In some implementations, the filter unit is configured to determine the filtered ipsilateral RF signal quality parameter as a function of a history of the ipsilateral RF signal quality parameter, thereby considering values of the ipsilateral RF signal quality parameter having been input into the filter unit over a preceding period of time. In particular, the filter unit may be configured to provide thereby for an averaging over time. In some implementations, the filter unit may comprise a median filter, and in particular it may comprise an IIR (infinite impulse response) filter and/or an FIR (finite impulse response) filter.

Some embodiments are defined in the dependent claims.

Examples of the disclosure are illustrated by reference to the drawings, wherein:
- Fig. 1: is a schematic illustration of an example of a wireless binaural hearing system;
- Fig. 2: is a flow diagram of an example of an in-situ calibration process for the receiver unit; and
- Fig. 3: is a schematic illustration of an example of a use situation of a wireless binaural hearing system.

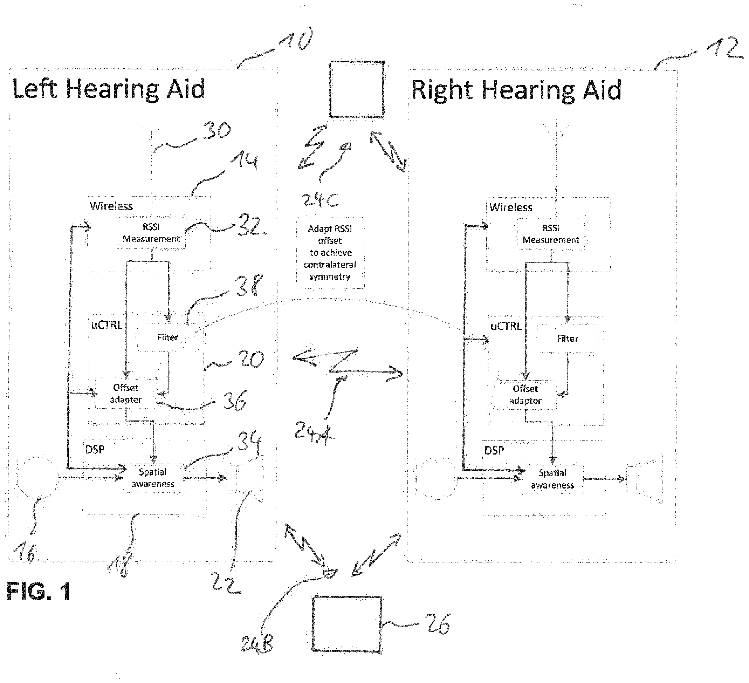

Fig. 1 shows an example of a wireless binaural hearing system comprising a first hearing device 10 to be worn at or at least partly in the left ear of a user and a second hearing device 12 to be worn at or at least partly in the right ear of the user. In the example of Fig. 1, the hearing devices 10, 12 are hearing aids comprising a receiver unit 14, a microphone arrangement 16, a signal processing unit 18, a control unit 20 and an electroacoustic output transducer (loudspeaker) 22. As used hereinafter, "hearing devices" include all kind of audio devices which are to be worn at the ear or are to be inserted at least in part into the ear canal; such hearing devices include, for example, earbuds, earphones, in-ear headphones, all kinds of hearing aids, and all kinds of hearing prostheses, like cochlear implants.

The receiver unit 14 is for wirelessly receiving RF signals via wireless links 24A, 24B and 24C from the other one of the hearing devices 10, 12, from an audio source device (transmission unit) 26, such as a wireless microphone, and/or from an accessory device 28, such as a remote control or a communication device, e.g., a smartphone. It is to be understood that the wireless links 24A, 24B, 24C typically are bidirectional, so that the receiver unit 14 has the function of a transceiver. The receiver unit 14 comprises an antenna 30 and a measurement unit 32 for measuring quality of the received RF signal so as to provide for an ipsilateral RF signal quality parameter.

In some implementations, the ipsilateral RF signal quality parameter is indicative of an RF signal level; in particular, the ipsilateral RF signal quality parameter provided by the measurement unit 32 may be an RSSI value, BER value, FER value or retransmission rate value.

The signal processing unit 18 is for processing input audio signal so as to generate processed audio signals to be used for hearing stimulation. In the example of Fig. 1, the processed audio signals are supplied to the loudspeaker 22, which serves to stimulate the user's hearing according to the processed audio signals.

The input audio signals may be supplied by the microphone arrangement 16, which captures input audio signals from ambient sound. Alternatively or in addition, the input audio signals may be received from an external audio source, for example, via the wireless links 24A, 24B and/or 24C. In particular, such input audio signals may be provided by the wireless microphone 26, the other one of the hearing devices 10, 12 and/or the communication device 28.

In the example of Fig. 1, the signal processing unit 18 comprises a "spatial awareness module" 34, which serves to achieve a close-to-natural hearing impression for wirelessly received audio signals by processing the wirelessly received audio signals in a manner so that the angular localization impression of the wirelessly received audio signals as perceived by the user corresponds to an estimated angular localization of the wireless audio source from which the wireless audio signals are received. Examples of such audio signal processing, which requires as an input the estimated angular localization of the wireless audio source, can be found in WO 2011/015675 A2 or in WO 2016/116160 A1.

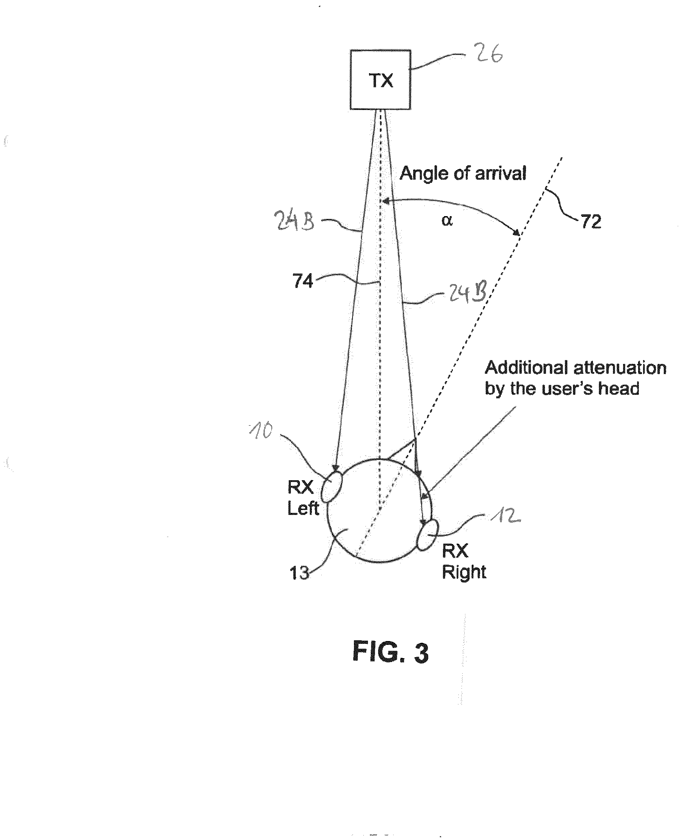

As is described in these documents, an angular localization estimation can be obtained by comparing the RF signal received by the right ear hearing device 10 and the RF signal received by the right ear hearing device 12. In particular, due to the adsorption of RF signals by the user's head, the difference in the quality of the RF signal as received by the right ear hearing device and the left ear hearing device will depend on the angular localization of the wireless audio source relative to the user's head. This principle is illustrated in Fig. 3, according to which the RF signals 24B transmitted by, for example, the wireless microphone 26 are received by the right ear hearing device 12 and the left ear hearing device 10 at a level depending on the angle of arrival α in a horizontal plane formed by the looking direction 72 of the user (which is a direction in a horizontal plane and perpendicular to the line connecting the two ears of the user 13) and a line 74 connecting the audio source 26 to the center of the head of the user 13 (typically, the vertical position of the audio source 26 will be close to the vertical position of the user's head, so that the looking direction 72 and the line 74 may be considered as being located in the same horizontal plane). The reason for the level difference is that once the angle α deviates from zero (this is the case when the user 13 looks into a direction different from the direction 74 of the audio source 26), due to the adsorption of RF signals by the user's head, the RF signals 24B will be received at the right ear hearing device 12 and the left ear hearing device 10 at different levels.

In the example of Fig. 3, the RF signal level as received by the right ear hearing device 12 will be lower than the RF signal level received at the left ear hearing device 10. In general, the signal at the side of the user's head, which is in the "shadow" with regard to the audio source 26 will receive a weaker RF signal. Hence, by comparing the RF signal strength as received by the right ear hearing device 12 and the RF signal strength received at the left ear hearing device 10, for example by comparing the respective RSSI values, for a given RF signal source it is possible to estimate the angular localization (which is the angle of arrival α) for each RF signal source 26.

The accuracy of the angular estimation depends on the accuracy of the RF signal level measurement in each of the hearing devices 10, 12; in particular, the angular localization estimation will be deteriorated if the two receiver units 14/RSSI measurement units 32 do not provide the same RSSI reading output to a given reference signal.

In the example of Fig. 1, the control unit 20 is provided for addressing this issue by providing for an appropriate binaural compensation for differences in the RF signal sensitivity of the receiver units 14. To this end, the control unit 20 comprises an offset adapter unit 36, which is for adjusting the ipsilateral RF signal quality parameter as provided by the RSSI measurement unit 32 before supplying such adjusted ipsilateral RF signal quality parameter to the signal unit 18, namely the spatial awareness module 34 thereof. In some implementations, the control unit 20 is configured to control the offset adapter unit 36 in a manner so as to equalize the adjusted ipsilateral RF signal quality parameter and the adjusted contralateral RF signal quality parameter (which is received from the other hearing device) for the case that the two hearing devices receive an RF signal with the same quality/level.

To achieve the desired adjustment of the ipsilateral RF signal quality parameter, the control unit 20 comprises a filter unit 38, which filters the ipsilateral RF signal quality parameter provided by the RSSI measurement unit 32 so as to provide a filtered ipsilateral RF signal quality parameter. The respective filtered contralateral RF signal quality parameter is received via the binaural wireless link 24A from the other hearing device 10, 12. The offset adapter unit 36 is adjusted according to the difference between the filtered ipsilateral RF signal quality parameter and the filtered contralateral RF signal quality parameter. In other words, the ipsilateral RF signal quality parameter provided by the measurement unit 32 is supplied not only to the offset adapter unit 36 for being adjusted prior to be supplied to the signal processing unit 18, but it is also supplied to the filter unit 38, the output of which is used, together with the respective filter unit output received from the other hearing device, for controlling the adjustment of the ipsilateral RF signal quality parameter in the offset adapter unit 36.

In some implementations, the filter unit 38 is configured to determine the filtered ipsilateral RF signal quality parameter as a function of a history of the ipsilateral RF signal quality parameter, namely as a function of the ipsilateral RF signal quality parameter values having been supplied to the filter unit 38 as input over a preceding period of time. In particular, the filter unit 38 may be configured to provide for some kind of averaging of the ipsilateral RF signal quality parameter over time. For example, the filter unit may comprise a median filter. However, it is to be understood that any other averaging filter may be suitable. In particular, the filter unit 38 may comprise IIR and/or FIR filters.

The term "averaging" of previous measurements of the RF signal quality parameter in the measurement unit 32 is to be understood broadly such that the results of a plurality of previous measurements is somehow mathematically combined/processed in the filter unit 38 so as to obtain the filtered ipsilateral RF signal quality parameter (which then is compared with the respective filtered contralateral RF signal quality parameter received from the other hearing device).

Such averaging is suitable for RF signal sensitivity calibration, since, when considering the angular position of the audio signal source relative to the user's head over a sufficiently long period of time, the average position will be approximately in the center (which is located on the line 72 in Fig. 3).

Alternatively or in addition, the required calibration time period may be reduced by performing the filtering (e.g., averaging) under defined calibration conditions during which both hearing devices receive the RF signal under defined (spatial) conditions; for example, the RF signal source may be located in the center, so that both hearing devices receive a signal having the same RF signal quality.

Such calibration conditions may be established, for example, during a fitting procedure at a fitter's office. To this end, the control unit 20 may activate the filter unit 38 based on an activation signal so as to initiate a calibration mode during which the filtered ipsilateral RF signal quality parameter is generated as an output of the filter unit 38. When the calibration mode is terminated by deactivating the filter unit 38, the filtered ipsilateral RF signal quality parameter remains constant (at a value corresponding to the value provided at the end of the calibration period) during times when the filter unit 38 is not active.

In some implementations, the activation signal may be provided by a remote control external to the hearing devices 10, 12, such as the external device 28, which may be, for example, a dedicated hearing device remote control or a communication device, such as a smartphone, with a corresponding remote control App, or a computer used for running a fitting software, etc. The calibration mode usually will be activated when the hearing devices 10, 12 are worn by the user and the user faces the audio source (for example, the wireless microphone 26) in a symmetrical manner. The calibration mode may be initiated, for example, by a hearing care professional/fitter through the device 28 or by the user of the hearing devices 10, 12. Accuracy of the calibration may be increased by repeating such calibration periods, wherein the filter unit 38 may integrate/average over several calibration periods.

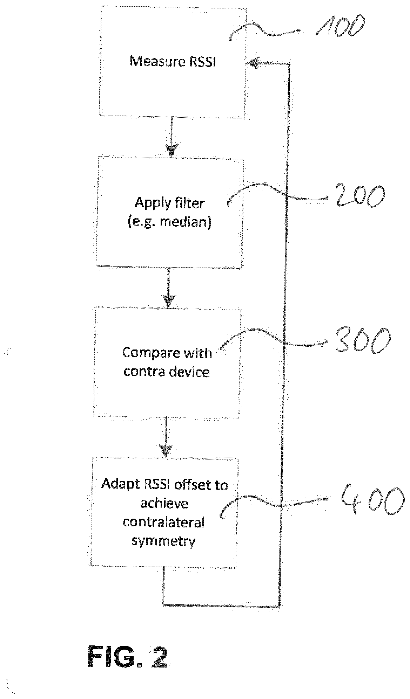

A schematic example of the calibration algorithm is illustrated in Fig. 2, wherein step 100 the signal quality parameter, such as a RSSI value, is measured, in step 200 the measured signal quality parameter is filtered, in step 300 the resulting filtered ipsilateral RF signal quality parameter is compared with the respective filtered contralateral RF signal quality parameter provided by the contralateral hearing device, and in step 400 the ipsilateral RF signal quality parameter is corrected by applying an appropriate offset according to the difference of the filtered ipsilateral RF signal quality parameter and the filtered contralateral RF signal quality parameter so as to achieve ipsilateral/contralateral symmetry of the RF signal quality parameter measurement.

As already mentioned above, the proposed in-situ calibration of the RF signal quality parameter measurement serves to increase accuracy of the binaural symmetry of the RF signal quality parameter measurement, in particular for improving accuracy of angular localization estimation for use in the audio signal processing, whereby, for example, calibration of the RF signal quality parameter measurement unit during production can be omitted.

As an alternative to the above-described methods for estimating the angular localization of the RF transmission units, in principle one could measure the RF signal time of arrival at each of the receiver units or measure the phase difference between the RF signals at the two receiver units at the same frequency by using a mixer. However, these methods need a precise common time base for measuring the time of flight of the RF signals or a phase reference for both receiver units, respectively.

## Claims

1. A binaural hearing system comprising a first hearing device (10) to be worn at or at least partly in a first ear of a user and a second hearing device (12) to be worn at or at least partly in a second ear of the user,
each of the hearing devices comprising :
a receiver unit (14) for wirelessly receiving Radio Frequency , RF, signals,
comprising a measurement unit (32) for measuring a quality of the received RF signals so as to provide for an ipsilateral RF signal quality parameter,
a control unit (20) , and
a signal processing unit (18) for processing input audio signals so as to generate processed audio signals to provide hearing assistance;
wherein the control unit comprises:
an offset adapter unit (36) for adjusting the ipsilateral RF signal quality parameter to produce an adjusted ipsilateral RF signal quality parameter, which is supplied to the ipsilateral signal processing unit, and
a filter unit (38) for providing a filtered ipsilateral RF signal quality parameter by filtering the ipsilateral RF signal quality parameter;
wherein the control unit is configured to :
receive a filtered contralateral RF signal quality parameter from the other hearing device, and
adjust the offset adapter unit according to a difference between the filtered ipsilateral RF signal quality parameter and the filtered contralateral RF signal quality parameter; and
wherein the control unit (20) is configured to receive an adjusted contralateral RF signal quality parameter from the other hearing device (10, 12), and wherein the signal processing unit (18) comprises a spatial awareness module (34) to which the adjusted contralateral RF signal quallity parameter and the adjusted ipsilateral RF signal quality parameter provided by the offset adapter unit are supplied as input and wherein the spatial awareness module (34) is configured to estimate from a difference between the adjusted ipsilateral RF signal quality parameter and the adjusted contralateral RF signal quality parameter an angular localization of a transmission unit (26, 28) which transmits the RF signal received by the two hearing devices.

2. The system of claim 1, wherein the ipsilateral RF signal quality parameter is indicative of an RF signal level, such as an RSSI value, a Bit Error Rate , BER, value, a Frame Error Rate , FER, value, or a Retransmission Rate value.

3. The system of claim 2, wherein the ipsilateral RF signal quality parameter is an RSSI value.

4. The system of one of the preceding claims, wherein the control unit (20) is configured to control the offset adapter unit (36) in a manner so as to equalize the adjusted ipsilateral RF signal quality parameter and the adjusted contralateral RF signal quality parameter in the event that the two hearing devices (10, 12) receive an RF signal with the same quality.

5. The system of one of the preceding claims, wherein the filter unit (38) is configured to determine the filtered ipsilateral RF signal quality parameter as function of the values of the ipsilateral RF signal quality parameter having been input into the filter unit over a preceding period of time.

6. The system of claim 5, wherein the filter unit (38) is configured to provide for an averaging over time.

7. The system of one of the preceding claims, wherein the filter unit (38) comprises a median filter.

8. The system of one of the preceding claims, wherein the control unit (20) is configured to activate the filter unit based on an activation signal, wherein the filtered ipsilateral RF signal quality parameter remains constant during times when the filter unit is not active, wherein the activation signal is preferably provided by a remote control external to the hearing devices (10, 12).

9. The system of one of the preceding claims, wherein the control unit (20) is configured to receive the filtered contralateral RF signal quality parameter from the control unit of the other hearing device (10, 12) via a binaural wireless link (24A).

10. The system of one of the preceding claims, wherein the hearing device (10, 12) comprises a microphone arrangement (16) for capturing input audio signals to be processed by the signal processing unit (18) from ambient sound.

11. The system of one of the preceding claims, wherein the receiver unit (14) is configured to wirelessly receive RF input audio signals to be processed by the signal processing unit (18) from a wireless audio source (12, 10, 26, 28).

12. The system of one of the preceding claims, wherein each hearing device (10, 12) comprises a unit for stimulating the user's hearing according to the processed audio signals, such as a loudspeaker (22) or a cochlear implant.

13. The system of claim 1, wherein each signal processing unit (18) is configured to process the audio signals received from the transmission unit (14) according to the estimated angular localization of the transmission unit (26, 28) in such a manner that the angular localization impression of the audio signals, when being used for stimulation of the user's hearing by the stimulation units, corresponds to the estimated angular localization of the transmission unit.

14. A method of operating a binaural hearing system comprising a first hearing device (10) worn at or at least partly in a first ear of a user and a second hearing device (12) worn at or at least partly in a second ear of the user, each of the hearing devices comprising a receiver unit (14) for wirelessly receiving RF signals, a control unit (20) and a signal processing unit (18) for processing input audio signals so as to generate processed audio signals to be used for hearing stimulation, the method comprising:
providing for an ipsilateral RF signal quality parameter by measuring a quality of the received RF signals;
adjusting the ipsilateral RF signal quality parameter by an offset adapter unit (36) to produce an adjusted ipsilateral RF signal quality parameter, which is supplied to the ipsilateral signal processing unit; and
controlling the offset adapter unit by
providing a filtered ipsilateral RF signal quality parameter by filtering the ipsilateral RF signal quality parameter in a filter unit (38),
receiving a filtered contralateral RF signal quality parameter from the other hearing device, and
adjusting the offset adapter unit according to a difference between the filtered ipsilateral RF signal quality parameter and the filtered contralateral RF signal quality parameter;
the method further comprising:
receiving, by the control unit (20), an adjusted contralateral RF signal quality parameter from the other hearing device (10, 12);
supplying the adjusted contralateral RF signal quality parameter and the adjusted ipsilateral RF signal quality parameter provided by the offset adapter unit as input to a spatial awareness module (34) of the signal processing unit (18); and
estimating, by the spatial awareness module (34), from a difference between the adjusted ipsilateral RF signal quality parameter and the adjusted contralateral RF signal quality parameter an angular localization of a transmission unit (26, 28) which transmits the RF signal received by the two hearing devices.

## Patentansprüche

1. Binaurales Hörsystem mit einer ersten Hörvorrichtung (10) zum Tragen an oder mindestens teilweise in einem ersten Ohr eines Nutzers und einer zweiten Hörvorrichtung (12) zum Tragen an oder mindestens teilweise in einem zweiten Ohr des Nutzers,
wobei jede der Hörvorrichtungen versehen ist mit:
einer Empfängereinheit (14) zum drahtlosen Empfangen eines Hochfrequenz-, RF, Signals, mit einer Messeinheit (32) zum Messen einer Qualität des empfangenen RF-Signals, um einen ipsilateralen RF-Signalqualitätsparameter bereitzustellen, einer Steuereinheit (20) sowie einer Signalverarbeitungseinheit (18) zum Verarbeiten von Eingangs-Audiosignalen, um verarbeitete Audiosignale zwecks Bereitstellung von Hörunterstützung zu erzeugen;
wobei die Steuereinheit versehen ist mit:
einer Offset-Adaptereinheit (36) zum Einstellen des ipsilateralen RF-Signalqualitätsparameters zwecks Erzeugen eines eingestellten ipsilateralen RF-Signalqualitätsparameters, welcher der ipsilateralen Signalverarbeitungseinheit zugeführt wird, und
einer Filtereinheit (38) zum Bereitstellen eines gefilterten ipsilateralen RF-Signalqualitätsparameters mittels Filtern des ipsilateralen RF-Signalqualitätsparameters;
wobei die Steuereinheit ausgebildet ist, um:
einen gefilterten kontralateralen RF-Signalqualitätsparameter von der anderen Hörvorrichtung zu empfangen, und
die Offset-Adaptereinheit gemäß einer Differenz zwischen dem gefilterten ipsilateralen RF-Signalqualitätsparameter und dem gefilterten kontralateralen RF-Signalqualitätsparameter einzustellen; und
wobei die Steuereinheit (20) ausgebildet, um einen eingestellten kontralateralen RF-Signalqualitätsparameter von der anderen Hörvorrichtung (10, 12) zu empfangen, und wobei die Signalverarbeitungseinheit (18) ein Raumverständnismodul (34) aufweist, welchem der eingestellte kontralaterale RF-Signalqualitätsparameter und der eingestellte ipsilaterale RF-Signalqualitätsparameter, der von der Offset-Adaptereinheit geliefert wird, als Eingangssignale zugeführt werden und wobei das Raumverständnismodul (34) ausgebildet ist, um aus einer Differenz zwischen dem eingestellten ipsilateralen RF-Signalqualitätsparameter und dem eingestellten kontralateralen RF-Signalqualitätsparameter eine Winkellokalisierung einer Sendeeinheit (26, 28) abzuschätzen, welche das von den beiden Hörvorrichtungen empfangene RF-Signal sendet.

2. System gemäß Anspruch 1, wobei der ipsilaterale RF-Signalqualitätsparameter bezeichnend ist für einen RF-Signalpegel, wie beispielsweise einen RSSI-Wert, einen Bit-Fehlerraten-, BER, Wert, einen Block-Fehlerraten-, FER, Wert oder einen Retransmissionsratenwert.

3. System gemäß Anspruch 2, wobei es sich bei dem ipsilateralen RF-Signalqualitätsparameter um einen RSSI-Wert handelt.

4. System gemäß einem der vorhergehenden Ansprüche, wobei die Steuereinheit (20) ausgebildet ist, um die Offset-Adaptereinheit (36) zu steuern, um den eingestellten ipsilateralen RF-Signalqualitätsparameter und den eingestellten kontralateralen RF-Signalqualitätsparameter anzugleichen, falls die beiden Hörvorrichtungen (10, 12) ein RF-Signal mit derselben Qualität empfangen.

5. System gemäß einem der vorhergehenden Ansprüche, wobei die Filtereinheit (38) ausgebildet ist, um den gefilterten ipsilateralen RF-Signalqualitätsparameter als Funktion der Werte des ipsilateralen RF-Signalqualitätsparameters zu bestimmen, die der Filtereinheit über einen vorangegangenen Zeitraum zugeführt wurden.

6. System gemäß Anspruch 5, wobei die Filtereinheit (38) ausgebildet ist, um für einen Zeitmittelung zu sorgen.

7. System gemäß einem der vorhergehenden Ansprüche, wobei die Filtereinheit (38) einen Medianfilter aufweist.

8. System gemäß einem der vorhergehenden Ansprüche, wobei die Steuereinheit (20) ausgebildet ist, um die Filtereinheit basierend auf einem Aktivierungssignal zu aktivieren, wobei der gefilterte ipsilaterale RF-Signalqualitätsparameter während Zeiten konstant bleibt, während denen die Filtereinheit nicht aktiv ist, wobei das Aktivierungssignal vorzugsweise von einer von den Hörvorrichtungen (10, 12) entfernten Fernbedienung bereitgestellt wird.

9. System gemäß einem der vorhergehenden Ansprüche, wobei die Steuereinheit (20) ausgebildet ist, um den gefilterten kontralateralen RF-Signalqualitätsparameter von der Steuereinheit der anderen Hörvorrichtung (10, 12) über eine binaurale drahtlose Verbindung (24A) zu empfangen.

10. System gemäß einem der vorhergehenden Ansprüche, wobei die Hörvorrichtung (10, 12) eine Mikrofonbaugruppe (16) aufweist, um Eingangsaudiosignale aus Umgebungsschall aufzufangen, die von der Signalverarbeitungseinheit (18) zu verarbeiten sind.

11. System gemäß einem der vorhergehenden Ansprüche, wobei die Empfängereinheit (14) ausgebildet ist, um RF-Eingangsaudiosignale drahtlos von einer drahtlosen Audioquelle (12, 10, 26, 28) zu empfangen, die von der Signalverarbeitungseinheit (18) zu verarbeiten sind.

12. System gemäß einem der vorhergehenden Ansprüche, wobei jede Hörvorrichtung (10, 12) eine Einheit zum Stimulieren des Gehörs des Nutzers gemäß den verarbeiteten Audiosignalen aufweist, wie beispielsweise ein Lautsprecher (22) oder ein Cochlea-Implantat.

13. System gemäß Anspruch 1, wobei jede Signalverarbeitungseinheit (18) ausgebildet ist, um die von der Sendeeinheit (14) empfangenen Audiosignale gemäß der abgeschätzten Winkellokalisierung der Sendeeinheit (26, 28) so zu verarbeiten, dass der Winkellokalisierungseindruck der Audiosignale, wenn diese zum Stimulieren des Gehörs des Nutzers mittels der Stimulationseinheiten verwendet werden, der abgeschätzten Winkellokalisierung der Sendeeinheit entsprechen.

14. Verfahren zum Betreiben eines binauralen Hörsystems mit einer ersten Hörvorrichtung (10) zum Tragen an oder mindestens teilweise in einem ersten Ohr eines Nutzers und einer zweiten Hörvorrichtung (12) zum Tragen an oder mindestens teilweise in einem zweiten Ohr des Nutzers, wobei jede der Hörvorrichtungen eine Empfängereinheit (14) zum drahtlosen Empfangen von RF-Signalen, eine Steuereinheit (20) sowie eine Signalverarbeitungseinheit (18) zum Verarbeiten von Audiosignalen zum Erzeugen von verarbeiteten Audiosignalen zur Verwendung bei Gehörstimulation aufweist, wobei:
ein ipsilateraler RF-Signalqualitätsparameter bereitgestellt wird, indem eine Qualität des empfangenen RF-Signals gemessen wird;
der ipsilaterale RF-Signalqualitätsparameter mittels einer Offset-Adaptereinheit (36) eingestellt wird, um einen eingestellten ipsilateralen RF-Signalqualitätsparameter zu erzeugen, welcher der ipsilateralen Signalverarbeitungseinheit zugeführt wird; und
die Offset-Adaptereinheit gesteuert wird, indem
ein gefilterter ipsilateraler RF-Signalqualitätsparameter bereitgestellt wird, indem der ipsilaterale RF-Signalqualitätsparameter in einer Filtereinheit (38) gefiltert wird,
ein gefilterter kontralateraler RF-Signalqualitätsparameter von der anderen Hörvorrichtung empfangen wird, und
die Offset-Adaptereinheit gemäß einer Differenz zwischen dem gefilterten ipsilateralen RF-Signalqualitätsparameter und dem gefilterten kontralateralen RF-Signalqualitätsparameter eingestellt wird;
wobei ferner:
mittels der Steuereinheit (20) ein eingestellter kontralateraler RF-Signalqualitätsparameter von der anderen Hörvorrichtung (10, 12) empfangen wird;
der eingestellte kontralaterale RF-Signalqualitätsparameter und der eingestellte ipsilaterale RF-Signalqualitätsparameter, der von der Offset-Adaptereinheit bereitgestellt wird, einem Raumverständnismodul (34) der Signalverarbeitungseinheit (18) als Eingangssignale zugeführt werden; und
mittels des Raumverständnismoduls (34) aus einer Differenz zwischen dem eingestellten ipsilateralen RF-Signalqualitätsparameter und dem eingestellten kontralateralen RF-Signalqualitätsparameter eine Winkellokalisierung einer Sendeeinheit (26, 28) abgeschätzt wird, die das von den beiden Hörvorrichtungen empfangene RF-Signal sendet.

## Revendications

1. Système auditif binaural comprenant un premier dispositif auditif (10) destiné à être porté au niveau de ou au moins en partie dans une première oreille d'un utilisateur et un second dispositif auditif (12) destiné à être porté au niveau de ou au moins en partie dans la seconde oreille de l'utilisateur,
chacun des dispositifs auditifs comprenant :
une unité de réception (14) destinée à recevoir sans fil des signaux de radiofréquence, RF, comprenant une unité de mesure (32) pour mesurer la qualité des signaux RF reçus de façon à fournir un paramètre de qualité de signal RF ipsilatéral,
une unité de commande (20), et
une unité de traitement de signal (18) destinée à traiter des signaux audio d'entrée de façon à générer des signaux audio traités pour fournir une assistance auditive ;
dans lequel l'unité de commande comprend :
une unité d'adaptation de décalage (36) destinée à ajuster le paramètre de qualité de signal RF ipsilatéral afin de produire un paramètre de qualité de signal RF ipsilatéral ajusté, qui est fourni à l'unité de traitement de signal ipsilatéral, et
une unité de filtrage (38) destinée à fournir un paramètre de qualité de signal RF ipsilatéral filtré en filtrant le paramètre de qualité de signal RF ipsilatéral ;
dans lequel l'unité de commande est configurée pour :
recevoir un paramètre de qualité de signal RF controlatéral filtré en provenance de l'autre dispositif auditif, et
ajuster l'unité d'adaptation de décalage en fonction d'une différence entre le paramètre de qualité de signal RF ipsilatéral filtré et le paramètre de qualité de signal RF controlatéral filtré ; et
dans lequel l'unité de commande (20) est configurée pour recevoir un paramètre de qualité de signal RF controlatéral ajusté en provenance de l'autre dispositif auditif (10, 12), et dans lequel l'unité de traitement de signal (18) comprend un module de conscience spatiale (34) auquel sont fournis en tant qu'entrée le paramètre de qualité de signal RF controlatéral ajusté et le paramètre de qualité de signal RF ipsilatéral ajusté fournis par l'unité d'adaptation de décalage et
dans lequel le module de perception spatiale (34) est configuré pour estimer, à partir d'une différence entre le paramètre de qualité de signal RF ipsilatéral ajusté et le paramètre de qualité de signal RF controlatéral ajusté, une localisation angulaire d'une unité de transmission (26, 28) qui transmet le signal RF reçu par les deux dispositifs auditifs.

2. Système selon la revendication 1, dans lequel le paramètre de qualité de signal RF ipsilatéral indique un niveau de signal RF, tel qu'une valeur RSSI, une valeur de taux d'erreurs sur les bits, BER, une valeur de taux d'erreurs sur les trames, FER, ou une valeur de taux de retransmission.

3. Système selon la revendication 2, dans lequel le paramètre de qualité de signal RF ipsilatéral est une valeur RSSI.

4. Système selon l'une des revendications précédentes, dans lequel l'unité de commande (20) est configurée pour commander l'unité d'adaptation de décalage (36) de sorte à égaliser le paramètre de qualité de signal RF ipsilatéral ajusté et le paramètre de qualité de signal RF controlatéral ajusté dans le cas où les deux dispositifs auditifs (10, 12) reçoivent un signal RF de même qualité.

5. Système selon l'une des revendications précédentes, dans lequel l'unité de filtrage (38) est configurée pour déterminer le paramètre de qualité de signal RF ipsilatéral filtré en fonction des valeurs du paramètre de qualité de signal RF ipsilatéral ayant été entrées dans l'unité de filtrage au cours d'une période de temps précédente.

6. Système selon la revendication 5, dans lequel l'unité de filtrage (38) est configurée pour fournir un moyennage dans le temps.

7. Système selon l'une des revendications précédentes, dans lequel l'unité de filtrage (38) comprend un filtre médian.

8. Système selon l'une des revendications précédentes, dans lequel l'unité de commande (20) est configurée pour activer l'unité de filtrage sur la base d'un signal d'activation, dans lequel le paramètre de qualité de signal RF ipsilatéral filtré reste constant pendant les moments où l'unité de filtrage n'est pas active, dans lequel le signal d'activation est de préférence fourni par une télécommande externe aux dispositifs auditifs (10, 12).

9. Système selon l'une des revendications précédentes, dans lequel l'unité de commande (20) est configurée pour recevoir le paramètre de qualité de signal RF controlatéral filtré en provenance de l'unité de commande de l'autre dispositif auditif (10, 12) par le biais d'un lien sans fil binaural (24A).

10. Système selon l'une des revendications précédentes, dans lequel le dispositif auditif (10, 12) comprend un agencement de microphone (16) destiné à capturer des signaux audio d'entrée à traiter par l'unité : de traitement de signal (18) à partir du son ambiant.

11. Système selon l'une des revendications précédentes, dans lequel l'unité de réception (14) est configurée pour recevoir sans fil des signaux audio d'entrée RF à traiter par l'unité de traitement de signal (18) à partir d'une source audio sans fil (12, 10, 26, 28).

12. Système selon l'une des revendications précédentes, dans lequel chaque dispositif auditif (10, 12) comprend une unité destinée à stimuler l'audition de l'utilisateur selon les signaux audio traités, telle qu'un haut-parleur (22) ou un implant cochléaire.

13. Système selon la revendication 1, dans lequel chaque unité de traitement de signal (18) est configurée pour traiter les signaux audio reçus de l'unité de transmission (14) en fonction de la localisation angulaire estimée de l'unité de transmission (26, 28) de telle sorte que l'impression de localisation angulaire des signaux audio, lors d'une utilisation pour la stimulation de l'audition de l'utilisateur par les unités de stimulation, corresponde à la localisation angulaire estimée de l'unité de transmission.

14. Procédé de fonctionnement d'un système auditif binaural comprenant un premier dispositif auditif (10) porté au niveau de ou au moins en partie dans une première oreille d'un utilisateur et un second dispositif auditif (12) porté au niveau de ou au moiris en partie dans la seconde oreille de l'utilisateur, chacun des dispositifs auditifs comprenant une unité de réception (14) destinée à recevoir sans fil des signaux RF, une unité de commande (20) et une unité de traitement de signal (18) destinée à traiter des signaux audio d'entrée de manière à générer des signaux audio traités à utiliser pour une stimulation auditive, le procédé comprenant :
la fourniture d'un paramètre de qualité de signal RF ipsilatéral en mesurant la qualité des signaux RF reçus ;
l'ajustement du paramètre de qualité de signal RF ipsilatéral par une unité d'adaptation de décalage (36) pour produire un paramètre de qualité de signal RF ipsilatéral ajusté, qui est fourni à l'unité de traitement de signal ipsilatéral ; et
la commande de l'unité d'adaptation de décalage par la fourniture d'un paramètre de qualité de signal. RF ipsilatéral filtré en filtrant le paramètre de qualité de signal RF ipsilatéral dans une unité de filtrage (38), la réception d'un paramètre de qualité de signal RF controlatéral filtré en provenance de l'autre dispositif auditif, et
l'ajustement de l'unité d'adaptation de décalage en fonction d'une différence entre le paramètre de qualité de signal RF ipsilatéral filtré et le paramètre de qualité de signal RF controlatéral filtré ;
le procédé comprenant en outre :
la réception, par l'unité de commande (20), d' un paramètre de qualité de signal RF controlatéral ajusté en provenance de l'autre dispositif auditif (10, 12) ;
la fourniture du paramètre de qualité de signal RF controlatéral ajusté et du paramètre de qualité de signal RF ipsilatéral ajusté fournis par l'unité d'adaptation de décalage en tant qu'entrée à un module de conscience spatiale (34) de l'unité de traitement de signal (18) ; et
l'estimation, par le module de conscience spatiale (34), à partir d'une différence entre le paramètre de qualité de signal RF ipsilatéral ajusté et le paramètre de qualité de signal RF controlatéral ajusté, d'une localisation angulaire d'une unité de transmission (26, 28) qui transmet le signal RF reçu par les deux dispositifs auditifs.
